# EUROPEAN PATENT APPLICATION

(11) **EP 2 088 342 A1**
(43) Date of publication of application: **12.08.2009**
(21) Application number: 07832950.5
(22) Date of filing: 03.12.2007
(51) Int. Cl.: F16C 33/66, C10M 107/38, C10M 119/22, C10M 169/02, C10N 20/04, C10N 20/06, C10N 30/00, C10N 40/02, C10N 50/10

(54) **ROLLING BEARING AND TOTAL ROLLING ELEMENT BEARING**

(30) Priority: 04.12.2006 JP 2006327523
(71) Applicant: JTEKT Corporation, Osaka-shi Osaka 542-8502 (JP)
(72) Inventor: ONO, Hiroshi, Osaka-shi Osaka 542-8502 (JP); FUJII, Yoshiki, Osaka-shi Osaka 542-8502 (JP); YAMAMOTO, Kenji, Osaka-shi Osaka 542-8502 (JP)
(74) Representative: Schaeberle, Steffen
(86) International application number: PCT/JP2007/073330
(87) International publication number: WO 2008/069177

(57) **Abstract**

Lubricant, which is shown by the following formula:

CF₃-(OCF₂CF₂)ₘ-(OCF₂)ₙ-OCF₃ [Chem. 1]

and contains PFPE whose average molecular weight is 11000 or more, and PTFE particles of which the average diameter of primary particles is 1 µm or less, is disposed on at least one of the first raceway of the first bearing ring, the second raceway of the second bearing ring, the surfaces of the rolling elements, and the surfaces of the respective pockets of the cage which face the rolling elements, in a ratio of 9 to 16 g per 1 m² with respect to a total area obtained by adding up the area of the first raceway, the area of the second raceway, the area of the surfaces of the rolling elements, and the area of the surfaces of the respective pockets of the cage which face the rolling elements.

## Description

### Technical Field

The present invention relates to a rolling bearing and a full complement rolling bearing.

### Background Art

Generally, a manufacturing process of semiconductors, liquid crystal substrates, hard disks, etc. is performed in vacuum or in a clean environment. However, dusting and outgassing from bearings deteriorate manufacture environment, and degrades product performance and yield.
In order to solve this problem, conventionally, forming a fluoric solid film on at least one of inner and outer rings, rolling elements, and a cage of a rolling was performed (for example, refer to JP-A-9-137830).

### Disclosure of the Invention

### Problem that the Invention is to solve

If the fluoric solid film is formed on the rolling surface of the rolling bearing in this way, it is possible to keep dusting and outgassing low. However, there was a problem that this fluorine-based solid film is significantly worn under conditions, such as a high-speed rotation and high load, and lifespan is reduced compared with lubrication of oil, such as general oil and grease.
The invention was made in view of such a problem, and an object thereof is to provide a rolling bearing and a full complement rolling bearing capable of securing a low dusting property and a low outgassing property and capable of achieving long lifespan.

### Means for Solving the Problem

A rolling bearing according to the present invention includes:
a first bearing ring having a first raceway,
a second bearing ring having a second raceway and capable of rotating relative to the first bearing ring,
a predetermined number of rolling elements disposed between the first raceway and the second raceway, and
a cage having a predetermined number of pockets which hold the rolling elements, respectively, at predetermined intervals in a peripheral direction,
wherein lubricant, which is shown by the following formula:

CF₃-(OCF₂CF₂)ₘ-(OCF₂)ₙ-OCF₃ [Chem.1]

where both m and n are positive integers and which contains perfluoropolyether whose average molecular weight is 11000 or more, and tetrafluoroethylene resin particles of which the average diameter of primary particles is 1 µm or less, is disposed on at least one of the first raceway, the second raceway, the surfaces of the rolling elements, and the surfaces of the respective pockets of the cage which face the rolling elements in a ratio of 9 to 16 g per 1 m² with respect to a total area obtained by adding up an area of the first raceway, an area of the second raceway, an area of the surfaces of the rolling elements, and an area of the surfaces of the respective pockets of the cage which face the rolling elements.

A full complement rolling bearing according to the invention includes:
a first bearing ring having a first raceway,
a second bearing ring having a second raceway and capable of rotating relative to the first bearing ring, and
a predetermined number of rolling elements disposed between the first raceway and the second raceway,
wherein lubricant, which is shown by the following formula:

[Chem. 2] CF₃-(OCF₂CF₂)ₘ-(OCF₂)ₙ-OCF₃

where both m and n are positive integers, and which contains perfluoropolyether whose average molecular weight is 11000 or more, and tetrafluoroethylene resin particles of which the average diameter of primary particles is 1 µm or less, is disposed on at least one of the first raceway, the second raceway, and the surfaces of the rolling elements, in a ratio of 9 to 16 g per 1 m² with respect to a total area obtained by adding up an area of the first raceway, an area of the second raceway, and an area of the surfaces of the rolling elements.

According to the rolling bearing and full complement rolling bearing of the invention, since perfluoropolyether whose evaporativity at high temperature is low is used, outgassing under high temperature is suppressed. Additionally, since the particle diameter of the tetrafluoroethylene resin particles is small, surface area is large, and oil-holding property is high. Also, since perfluoropolyether is held by the tetrafluoroethylene resin particles by mixing the tetrafluoroethylene resin particles having excellent oil-holding property with perfluoropolyether, dusting is suppressed. Moreover, both low dusting property and long lifespan can be achieved by disposing the lubricant including these in a ratio of 9 to 16 g per 1 m² with respect to the total area of a rolling and sliding surface.

In the above rolling bearing and full complement rolling bearing, it is preferable that the lubricant be disposed in a ratio of 9 to 14 g per 1 m² with respect to the total area. In this case, occurrence of dusting can be further suppressed.

In the rolling bearing and full complement rolling bearing of the invention, it is preferable that the tetrafluoroethylene resin particles be added by 40 to 60 vol.% with respect to the perfluoropolyether. In this case, a high dusting-suppressing effect is obtained.

### Advantage of the Invention

According to the invention, it is possible to obtain a rolling bearing and a full complement rolling bearing capable of securing a low dusting property and a low outgassing property and capable of achieving long lifespan.

### Brief Description of the Drawings

Fig. 1 is a cross-sectional explanatory view showing a rolling bearing according to a first embodiment of the invention.
Fig. 2 is a schematic explanatory view illustrating a lubricating film of the rolling bearing of Fig. 1.
Fig. 3 is a cross-sectional explanatory view showing a full complement rolling bearing according to a second embodiment of the invention.
Fig. 4 is a graph showing results of an evaporativity test.
Fig. 5 is a schematic explanatory view of a testing machine used for the dusting test.
Fig. 6 is a graph showing results of a dusting test.
Fig. 7A is an electron microscope photograph of PTFE-A powder, and Fig. 7B is an electron microscope photograph of PTFE-B powder.
Fig. 8 is a graph showing results of a dusting test.
Fig. 9 is a graph showing results of a dusting test.
Fig. 10 is a schematic explanatory view of a testing machine used for a bearing endurance test.
Fig. 11 is a graph showing results of a dusting test.
Fig. 12 is a graph showing results of a bearing endurance test.

### Best Mode for Carrying Out the Invention

Hereinafter, an embodiment of the invention will be described with reference to the accompanying drawings.

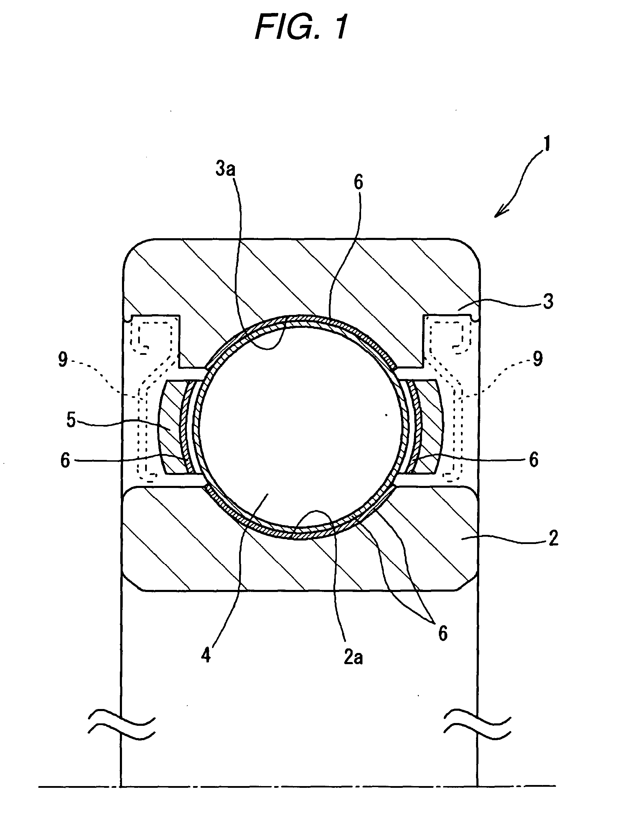

Fig. 1 is a cross-sectional explanatory view showing a rolling bearing according to a first embodiment of the invention. The rolling bearing 1 includes an inner ring 2 as a first bearing ring having an inner ring raceway 2a as a first raceway, an outer ring 3 as a second bearing ring having an outer ring raceway 3a as a second raceway and capable of rotating relative to the inner ring 2 that is the first bearing ring, balls 4 as a predetermined number of rolling elements disposed between the inner ring and the outer ring, and a cage 5 having a predetermined number of pockets which hold the balls, respectively, at predetermined intervals in a peripheral direction. Here, a corrugated cage manufactured by pressing is used as the cage 5. This rolling bearing is a deep groove ball bearing.

More specifically, the inner ring 2, the outer ring 3, the balls 4, and the cage 5 are formed of a metallic material generally used for bearings. In addition, the inner ring, the outer ring, the balls, and the cage are formed of, for example, a metallic material having corrosion resistance. The metallic materials used for the inner ring 2, the outer ring 3, and the balls 4 include, for example, bearing steel, such as JIS Standard SUJ2, martensite-based stainless steel, such as JIS Standard SUS440C, precipitation hardening type stainless steel, such as JIS Standard SUS630, and those obtained by subjecting these metallic materials to suitable hardening heat treatment, such as carburizing treatment, nitriding treatment, and coating of diamond-like carbon. The cage 5 is formed mainly of JIS Standard SUS304, and when a shield plate 9 is included, the cage is formed mainly of JIS Standard SUS304.

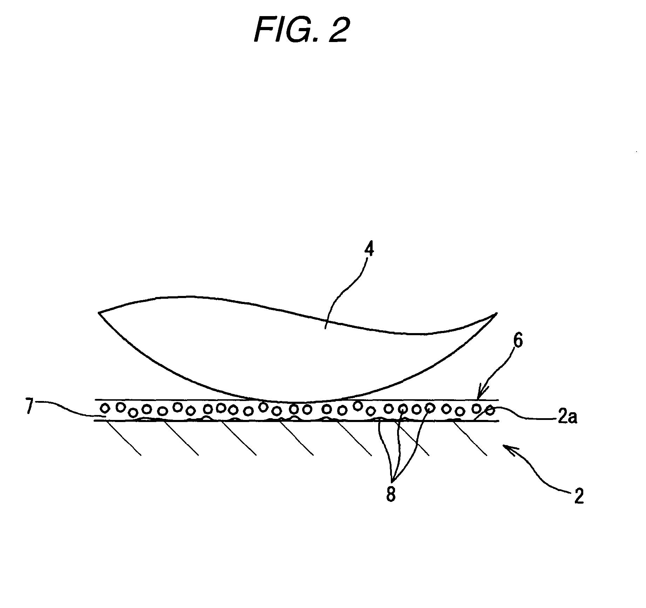

In the rolling bearing 1 in this embodiment, the lubricating film 6 which will be described below is formed by disposing lubricant on the inner ring raceway 2a that is a first raceway, the outer ring raceway 3a that is a second raceway, the surfaces of the balls 4 that are rolling elements, and the surfaces of respective pockets of the cage which face the balls 4, i.e., the inner surfaces of the respective pockets, (hereinafter, these surfaces are simply and altogether referred to as a rolling and sliding surface). Fig. 2 is a schematic explanatory view illustrating the lubricating film 6. In addition, in order to explain the lubricating film 6 plainly, only a state where the lubricating film 6 is formed in the inner ring raceway 2a is shown in Fig. 2.

The lubricant which forms lubricating film 6 is shown by the following formula:

CF₃-(OCF₂CF₂)ₘ-(OCF₂)ₙ-OCF₃ [Chem. 3]

The lubricating film is shown by the above formula (where both m and n are positive integers), and contains perfluoropolyether (hereinafter referred to as PFPE) 7 whose average molecular weight is 11000 or more, and tetrafluoroethylene resin (hereinafter referred to as PTFE) particles 8 of which the average diameter of primary particles is 1 µm or less, and becomes a so-called gel state.

Since the PFPE 7 has low evaporativity at high temperature, outgassing under high temperature can be suppressed. As the PFPE 7, for example, FOMBLIN Z60 (trade name) made by Solvay Solexis, Inc. can be used. The average molecular weight of this FOMBLIN Z60 is about 11000 to 15000, the kinematic viscosity thereof at 40°C is 355 cSt (ATSM D455), the kinematic viscosity thereof at 100° is 98 cSt (ATSM D455), and the surface tension thereof is 25 dyne/cm.

Since the average diameter of the primary particles of the PTFE particles 8 is 1 µm or less, and the particle size thereof is small, surface area is large, and accordingly, oil-holding property is high. If the average diameter of the primary particles exceeds 1 µm, since surface area is small, oil-holding amount is small. Additionally, it is considered that lubricity of oil deteriorates due to the existence of giant particles whose diameter exceeds 1 µm in the rolling and sliding surface. As the PTFE particles 8, for example, TLP-10F-1 (trade name) made by Du Pont-Mitsui Fluorochemicals Company, Ltd. can be used. The primary particle diameter (SEM) of this TLP-10F-1 is 0.2 µm, and the average (micro-track, and dispersion of 12 minutes) of the particle diameter is 2 to 4 µm. 90% or more of the primary particles have a particle diameter larger than 0.5 µm, and 90% or less of the primary particles have a particle diameter smaller than 5 µm.

Since the PFPE 7 is held by the PTFE particles 8 by mixing the PTFE particles 8 having excellent oil-holding property with the PFPE 7, dusting is suppressed. If the PTFE particles 8 are added by 40 to 60 vol.% with respect to the PFPE 7, a high dusting suppressing effect is obtained, which is preferable. If the additive amount of the PTFE particles 8 is less than 40 vol.%, dusting which is not preferable increases, and even if the additive amount exceeds 60 vol.%, a dusting-suppressing effect does not improve. More preferably, the PTFE particles 8 are added by 45 to 55 vol.% with respect to the PFPE 7. The PTFE particles 8 are mixed with the PFPE 7, whereby the PTFE particles 8 are interposed in the rolling and sliding surface even when the lubricating film 6 is cut.
Thereby, metal contact can be prevented to alleviate wear of the rolling and sliding surface. Thereby, dusting caused by wear can be reduced, and lifespan can be extended.

The above lubricant is disposed in a ratio of 9 to 16 g per 1 m² with respect to a total area (hereinafter, referred to as the total area of the rolling and sliding surface) obtained by adding up the area of the inner ring raceway 2a, the area of the outer ring raceway 3a, the area of the surfaces of a predetermined number of balls 4, and the area of the surfaces of respective pockets of the cage 5 which face the balls. Thereby, both low dusting property and long lifespan can be achieved. If the mass of the lubricant has a ratio of less than 9 g per 1 m² with respect to the total area of the rolling and sliding surface, there is a possibility that the lifespan may become short, and if the mass of the lubricant exceeds a ratio of 16 g per 1 m² with respect to the total area of the rolling and sliding surface, the amount of dusting increase at the initial stage of rotation, and therefore, this is not preferable. It is preferable that the mass of the lubricant be disposed in a ratio of 9 to 14 g per 1 m² with respect to the total area of the rolling and sliding surface. In this case, occurrence of dusting can be further suppressed.

Next, the method of disposing the above lubricant on the rolling and sliding surface of the rolling bearing 1 will be described.
First, a coating liquid is prepared by mixing the PFPE 7 and a suitable diluted solvent (for example, TAFLAC KS-200D) in a weight ratio of 1:9, and adding and mixing a predetermined volume (for example, 50 vol.%) of the PTFE particles 8 to the PFPE 7.
Then, a specified amount of the coating liquid is injected into a bearing raceway portion of the rolling bearing 1 (bearing type number 6000) in a state where the inner ring 2, the outer ring 3, the rolling elements 4, and the cage 5 are assembled up by a micro-syringe which can meter an extremely small amount of the lubricant, and thereafter, the coating liquid is spread on the whole by rotating the rolling bearing 1 manually. Thereafter, the diluted solvent is evaporated to form the lubricating film 6 by performing heat-treatment at 120°C for 1 hour.

When the coating liquid of 5% of bearing space volume is injected, the PFPE 7 is disposed in a bearing space volume ratio of about 0.5%. This is equivalent to lubricant of 11.5 g per 1 m² with respect to the total area of the rolling and sliding surface of the rolling bearing 1 (bearing type number 6000). Then, the PTFE particles 8 are included in a volume ratio of 50% with respect to the PFPE 7.
Similarly, as for the relationship between the bearing space volume ratio as the PFPE 7 in the rolling bearing 1 (bearing type number 6000), and lubricant mass per unit area, about 0.3% is equivalent to 6.9 g/m², about 0.4% is equivalent to 9.2 g/m², about 0.6% is equivalent to 13.8 g/m², about 0.7% is equivalent to 16.1 g/m², and about 1.0% is equivalent to 23.0 g/m². In addition, the bearing space volume ratio as the PFPE 7 is the value of the volume of the PTFE particles 8 in lubricant to the bearing space volume. Here, the bearing space volume is obtained by disposing the spaces where the outer peripheral surface of the inner ring 2, and the inner peripheral surface of the outer ring 3 face each other at both axial ends of the inner peripheral surface of the outer ring 3 shown by dotted lines in Fig. 1, and disposing two shield plates 9 which faces each other at a distance at the outer peripheral surface of the inner ring 2, thereby subtracting, from the volume of inner spaces which isolates the above spaces into the inner spaces and outer spaces, the volume of members other than the lubricant in the inner spaces, for example, the volume of all the rolling elements 4 and the volume of the cage 5 if there exists the cage 5. Further, a non-contact portion between the outer peripheral surface of the inner ring 2 and each shield plate 9 is delimitated at a surface obtained by extending the shield plate 9 in a radial direction.

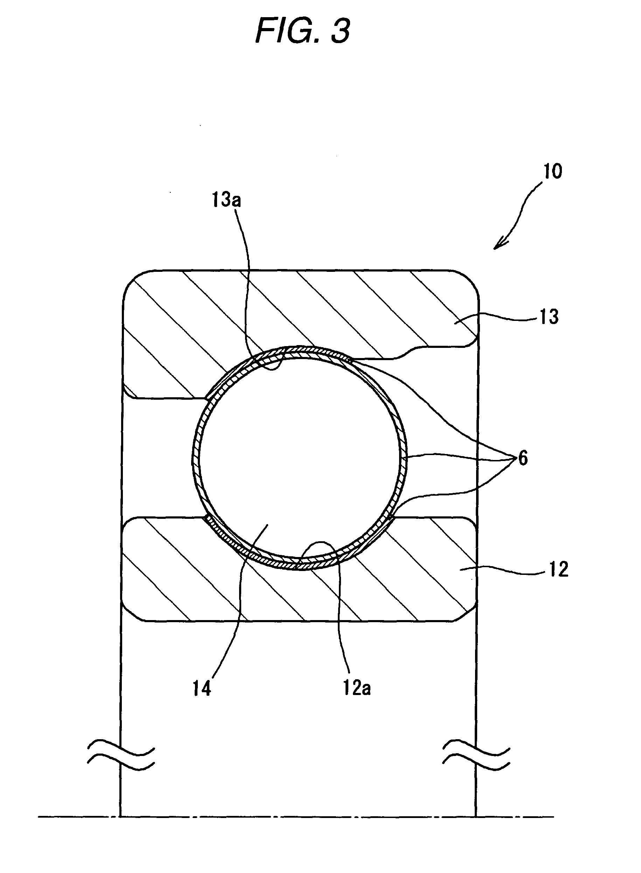

Fig. 3 is a cross-sectional explanatory view showing a full complement rolling bearing according to a second embodiment of the invention. The full complement rolling bearing 10 includes an inner ring 12 as a first bearing ring having an inner ring raceway 12a as a first raceway, an outer ring 13 as a second bearing ring having an outer ring raceway 13a as a second raceway and capable of rotating relative to the inner ring 12 that is the first bearing ring, and balls 14 as a predetermined number of rolling elements disposed between the inner ring and the outer ring. That is, in the present specification, the full complement rolling bearing 10 means a rolling bearing with no cage 5. The full complement rolling bearing 10 is an angular ball bearing. This bearing is different from the first embodiment in that it does not include the cage 5, and is an angular ball bearing.

The inner ring 12, outer ring 13, and balls 14 of the full complement rolling bearing 10 correspond to the inner ring 2, outer ring 3, and balls 4 of the above-described rolling bearing 1 and the description thereof is omitted.
In the full complement rolling bearing 10, the above-described lubricant is disposed on the inner ring raceway 12a that is a first raceway, the outer ring raceway 13a that is a second raceway, and the surfaces of the balls 14 that are rolling elements, thereby forming the lubricating film 6. Here, the lubricant is disposed in a ratio of 9 to 16 g per 1 m² with respect to a total area obtained by adding up the area of the inner ring raceway 12a, the area of the outer ring raceway 13a, and the area of the surfaces of a predetermined number of balls 14. Thereby, both low dusting property and long lifespan can be achieved. If the mass of the lubricant has a ratio of less than 9 g per 1 m² with respect to the total area of the rolling and sliding surface, there is a possibility that the lifespan may become short, and if the mass of the lubricant exceeds a ratio of 16 g per 1 m² with respect to the total area of the rolling and sliding surface, the amount of dusting increase at the initial stage of rotation, and therefore, this is not preferable. It is preferable that the mass of the lubricant be disposed in a ratio of 9 to 14 g per 1 m² with respect to the total area of the rolling and sliding surface. In this case, occurrence of dusting can be further suppressed.

Here, since the lubricant is prepared by mixing the PFPE 7 and the PTFE particles 8 having excellent oil-holding property, the PFPE 7 is held by the PTFE particles 8. Therefore, dusting is suppressed. It is preferable that the PTFE particles 8 be added by 40 to 60 vol.% with respect to the PFPE 7, and it is more preferable that the PTFE particles 8 be added by 45 to 55 vol.% with respect to the PFPE 7. If the PTFE particles 8 are added within this range, a high dusting-suppressing effect can be obtained.

In addition, in the rolling bearing 1 of the first embodiment, the lubricating film 6 is formed on all the inner ring raceway 2a, the outer ring raceway 3a, and the surfaces of the balls 4, and the inner surfaces of respective pockets of the cage. However, the lubricating film may be formed on at least one of these surfaces. Similarly, in the full complement rolling bearing 10 of the second embodiment, the lubricating film 6 is formed on all the inner ring raceway 2a, the outer ring raceway 3a, and the surfaces of the balls 4. However, even in this case, the lubricating film may be formed on at least one of these surfaces. For example, by relatively rotating the inner ring 2 and the outer ring 3 so that the balls 4 roll, for example, like run-in rotation, the lubricating film 6 is able to move to the places of the rolling and sliding surface which require lubrication.
Additionally, a method of disposing the lubricant is also not limited to the above method. As long as a predetermined amount of lubricant can be disposed on a predetermined surface, the lubricant may be sprayed, for example, using a spray or the like instead of a micro-syringe. A predetermined amount of lubricant may be coated on a predetermined surface.
Lubricant can be disposed by pulling up the rolling bearing 1 or full complement rolling bearing 10 which is assembled after dipping in a reservoir tank for a coating liquid. Additionally, with unnecessary places masked, each single body can be dipped in a reservoir tank for a coating liquid before being assembled as a bearing, and be pulled up. After lubricant is disposed, it is preferable that the shield plate 9 which is fixed to one bearing ring and faces the other bearing ring with a small distance therebetween is attached to the side isolated from the outer space axially outside the rolling bearing 1. Although the shield plate 9 is not indispensable, dusting can be further suppressed by providing the shield plate 9. Moreover, it is preferable that shield plates 9 be attached to both axial sides in order to prevent entering of foreign substances after lubricant is disposed.

### Examples

1-1. Evaporativity evaluation of fluorine-based lubricating oil Evaporativity was evaluated using three kinds of fluorine-based lubricating oil which will be described below. The fluorine-based lubricating oil is lubricating oil which is normally used in vacuum.
As lubricating oil 1, FOMBLIN Z TETRAOL (trade name) having the following structural formula (where both m and n are positive integers) and made by Solvay Solexis, Inc. was used.

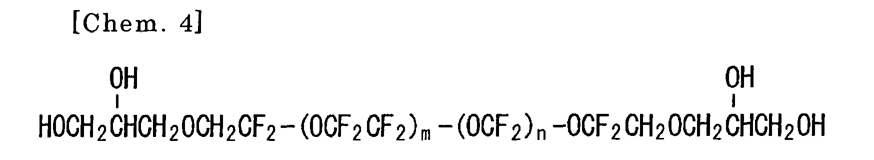

As lubricating oil 2, the above-described FOMBLIN Z60 (trade name) having the following structural formula (where both m and n are positive integers) was used.

CF₃-(OCF₂CF₂)ₘ-(OCF₂)ₙ-OCF₃ [Chem. 5]

As lubricating oil 3, DEMNUM S200 (trade name) having the following structural formula (where n is a positive integer) and made by Daikin Industries, LTD. was used.

F-(CF₂CF₂CF₂O)ₙ-CF₂CF₃ [Chem. 6]

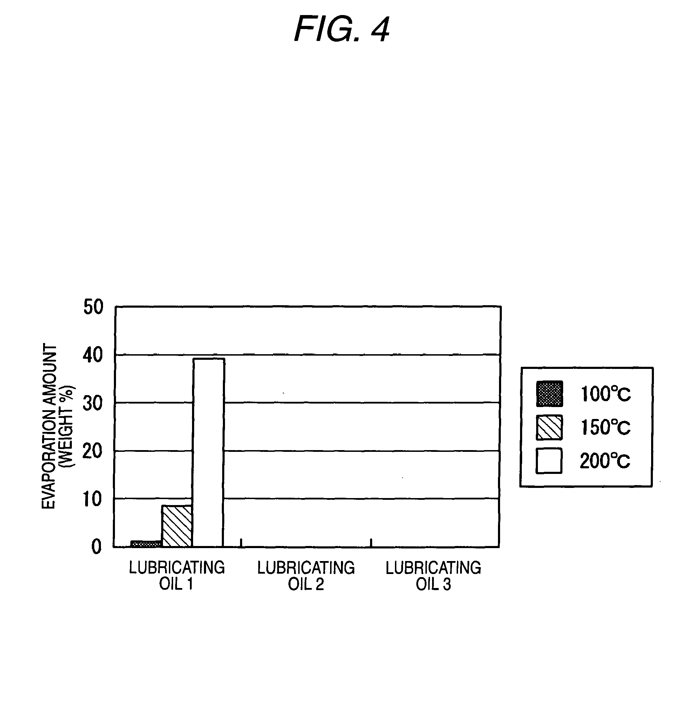

As an evaluation method, fixed amounts (about 0.4 g) of lubricating oils 1, 2 and 3 were respectively put into beakers whose internal diameter is about 30 mm, and were left at rest for 22 hours at 100°C, 150°C, and 200(C, respectively. The mass of the lubricating oil at each temperature were measured after 22 hours, and evaporation amount (weight %) was calculated from the difference between the mass after heating and the mass before heating. The results are shown in Fig. 4.
It turned out from Fig. 4 that the lubricating oils 2 and 3 (outgassing is not generated) are hardly evaporated at high temperatures (100(C, 150(C, and 200(C).

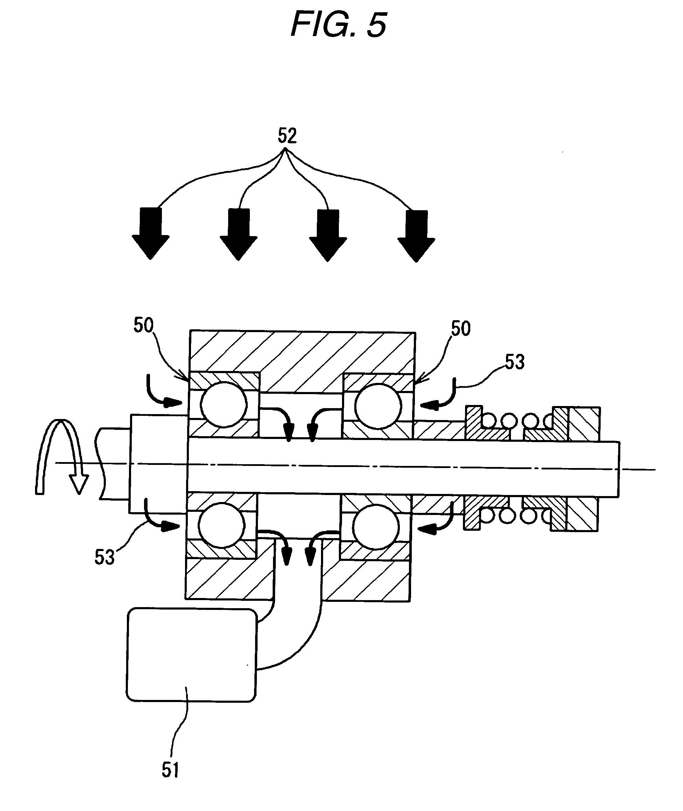

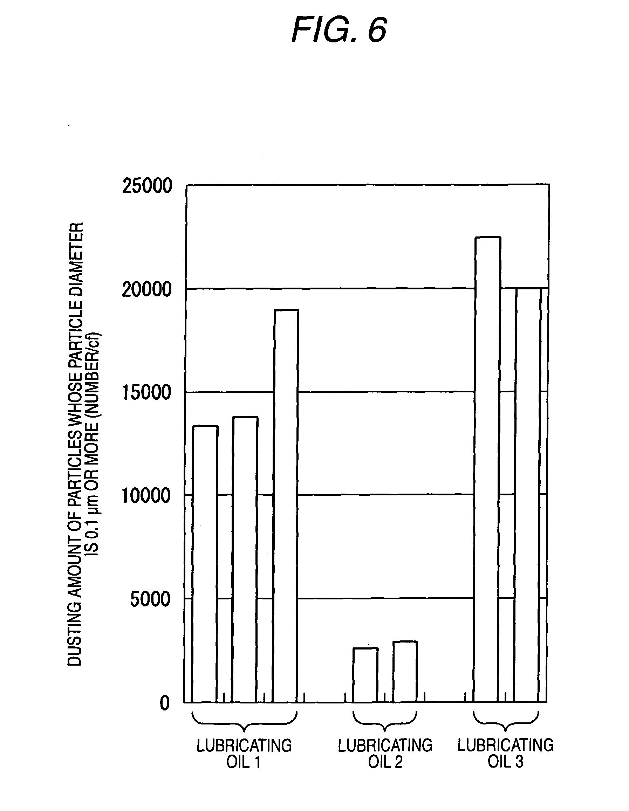

1-2. Bearing dusting performance evaluation of fluorine-based lubricating oil Bearing dusting performance evaluation of the above three kinds of fluorine-based lubricating oils was performed using a testing device shown in Fig. 5. Although not shown in Fig. 5, an upper portion of a test bearing 50 is provided with an air inlet, and a bottom part thereof is connected to a particle counter 51. Since air stream as shown by an arrow 53 is generated toward the particle counter 51 from the air inlet by supplying clean air (a black-coated arrow shown in Fig. 5) 52 at a predetermined flow rate from the air inlet, the particle counter 51 can detect the amount of dusting caused from the test bearing 50. The bearing type number 6000 ((10((26(8) provided with a cage as the test bearing 50 is used, lubricating oils 1, 2, and 3 are injected into respective test bearings 50 in a bearing space volume ratio of about 0.5% (11.5 g per 1 m2 with respect to the total area of the rolling and sliding surface) by using the above-described deposition method, and test was conducted under measuring conditions shown in Table 1 without attaching the shield plate to both axial ends. The results are shown in Fig. 6.

**[Table 1]**

| Items | | Contents |
|---|---|---|
| Test Conditions | Rotational Speed | 200 r/min |
| | Load | Axial 30 N |
| Measuring Conditions | Number of Measurement | 0.1 cf(10 times (Measurement Time 100 Minutes) |
| | Atmosphere | In Clean Bench of Clean Room |
| | Diameter of Particles to be Measured | 0.1 (m or more |
| | Measurement Period | After Rotation for 20 Hours |
| Number of Measurement | | Two Sets with Each Specification |

It turned out from Fig. 6 that the amount of dusting in the lubricating oil 2 is significantly small compared with the lubricating oils 1 and 3 after rotation for 20 hours.

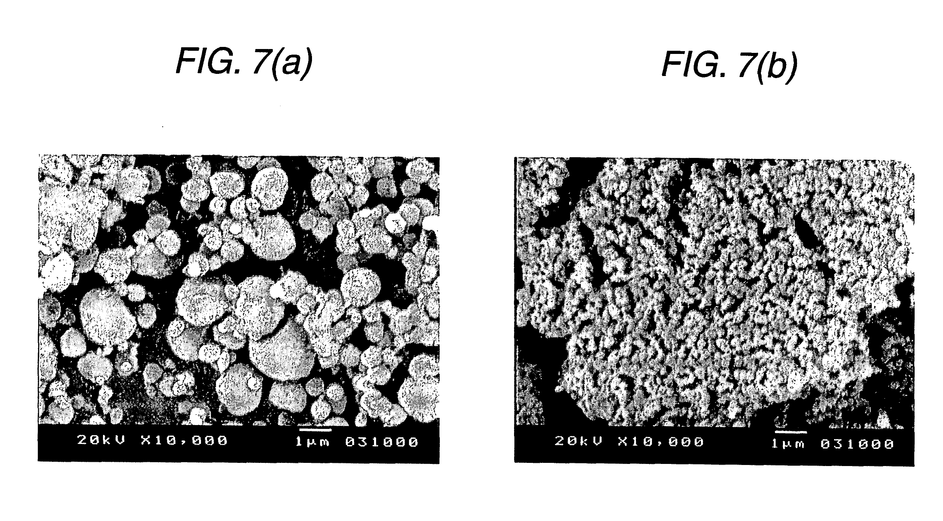

2. Consideration of dusting-suppressing effect when PTFE particles having different average diameter of primary particles is mixed with the above lubricating oil 2.
Ceralube V made by Central Glass Co., Ltd. (trade name) was used as PTFE-A powder of which the average diameter of the primary particles is larger than 1 µm. The electron microscope photograph thereof is shown in Fig. 7A. It can be understood from Fig. 7A that not only the average diameter of the primary particles of the PTFE-A powder is larger than 1 µm, but also there is variation in the size of the particles.
As PTFE-B powder of which the average diameter of the primary particles is 1 µm or less, for example, the aforementioned TLP-10F-1 (trade name) made by Du Pont-Mitsui Fluorochemicals Company, Ltd. was used. The electron microscope photograph thereof is shown in Fig. 7B. In the electron microscope photograph, there is almost nothing that has a larger diameter of the primary particles than 0.5 (m. It can be understood from Fig. 7B that the average diameter of the particles of the PTFE-B powder is almost constant, and there is little variation in the size of the particles.

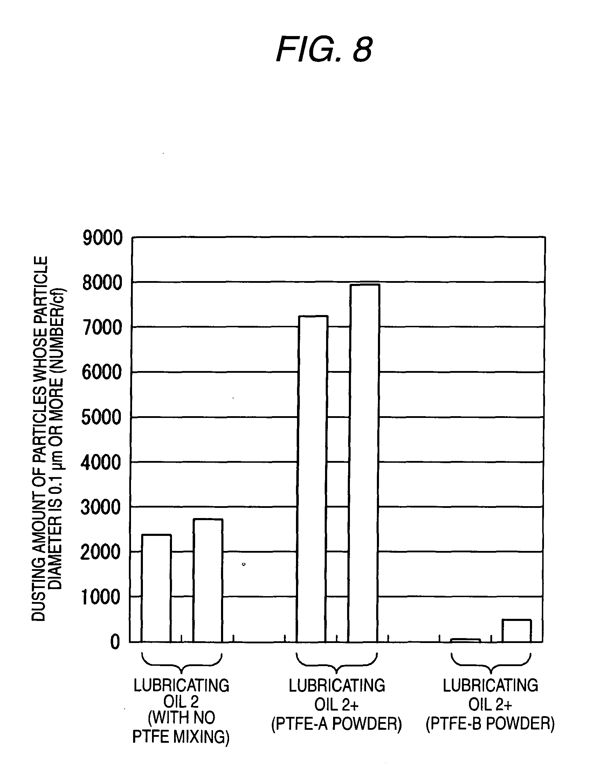

PTFE-A powder and PTFE-B powder were mixed in the lubricating oil 2 by 30 vol.%, respectively, the lubricating oil 2 was enclosed by the bearing space volume of 0.5% as the amount thereof, and the amount of dusting was measured similarly to the above 1 to 2. The results are shown in Fig. 8 with the above results obtained by conducting a test only with the lubricating oil 2.
It turned out from Fig. 8 that the amount of dusting increases compared with only the lubricating oil 2 in which PTFE is not mixed if PTFE-A powder is mixed with the lubricating oil 2, whereas the amount of dusting decreases compared with only the lubricating oil 2 if PTFE-B powder is mixed with the lubricating oil 2. It can be said from this that the PTFE-B powder of which the average diameter of the primary particles is 1 (m or less has a great dusting-suppressing effect.

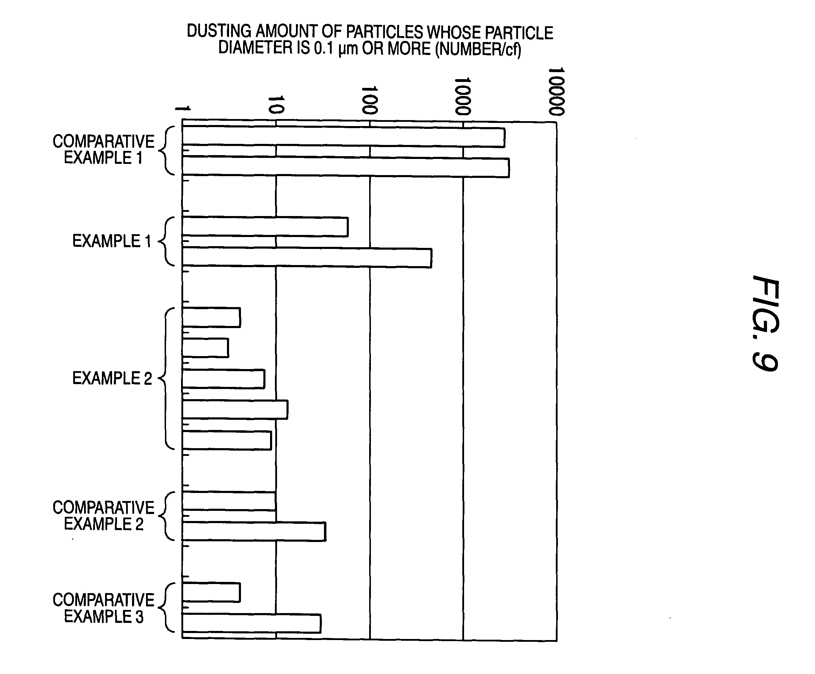

3. Consideration of dusting-suppressing effect when the mixed amount of PTFE-B powder to lubricating oil is changed Next, the dusting-suppressing effect was evaluated using test bearings of Examples 1 to 2 and Comparative Examples 1 to 3 of Table 3 in which the mixed amount of PTFE-B powder to lubricating oil 2 (and enclosed amount thereof to the bearings) is changed. The test conditions are the same as those of the above dusting test. The results are shown in Fig. 9.

**[Table 2]**

| | Mixed Amount of PTFE-B Powder (vol.% with respect to Lubricating Oil 2) | Enclosed Amount to Bearing (vol.% as Lubricating Oil 2 with respect to Bearing Space Volume) |
|---|---|---|
| Comparative Example 1 | 0 | 0.5 |
| Example 1 | 30 | 0.5 |
| Example 2 | 50 | 0.5 |
| Comparative Example 2 | 50 | 1.0 |
| Comparative Example 3 | 70 | 1.0 |

By comparing Example 1 with Example 2 in Fig. 9, it turned out that the dusting-suppressing effect improves if the mixed amount of PTFE-B powder is increased from 30 vol.% to 50 vol.%. However, it turned out from the comparison between Comparative Example 2 with Comparative Example 3 that the dusting-suppressing effect seldom changes even if the mixed amount of PTFE-B powder is increased from 50 vol.% to 70 vol.%.

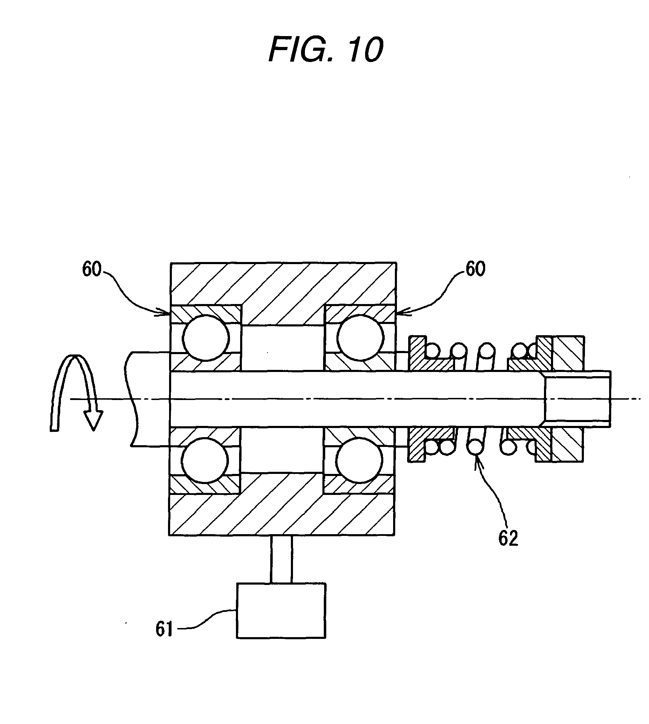

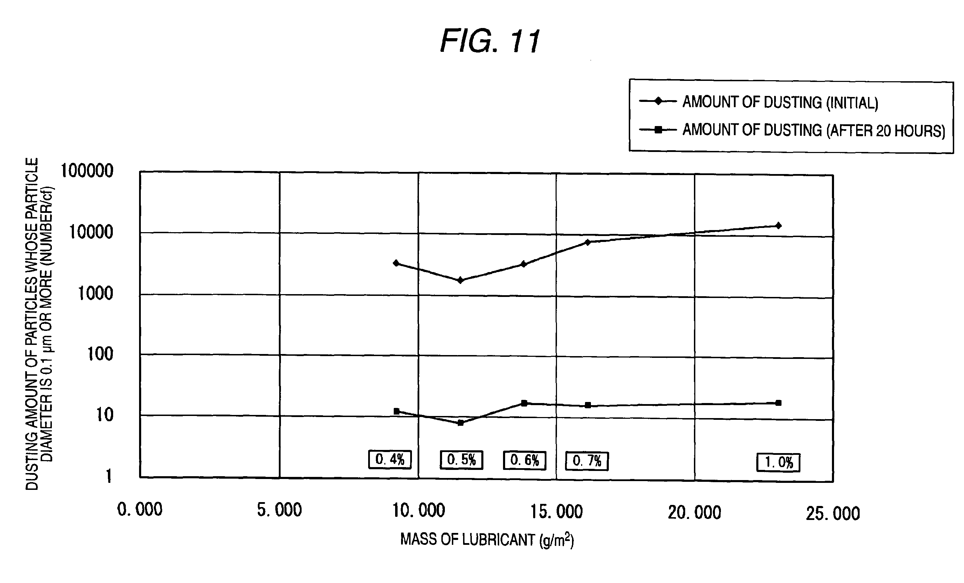

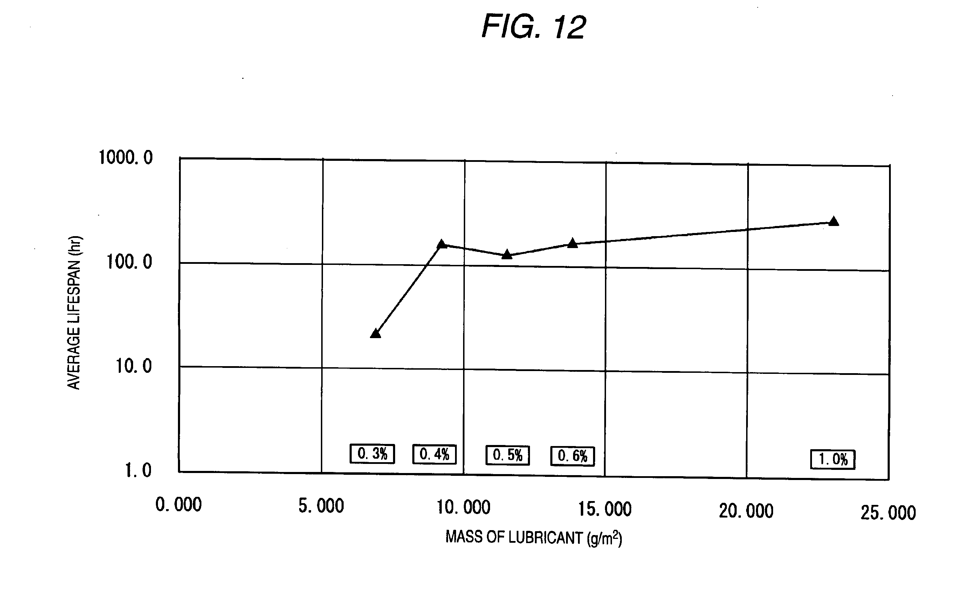

4. Consideration of dusting-suppressing effect and bearing durability when enclosed amount of lubricant is changed
The amounts of dusting at the initial stage of rotation and after rotation for 20 hours, and bearing durability was evaluated by using lubricant obtained by mixing 50 vol.% of PTFE-B powder with the lubricating oil 2, and changing the enclosed amount of lubricant as the lubricating oil 2. The test conditions of the dusting test are the same as the above ones.
A testing machine shown in Fig. 10 was used in the bearing endurance test to measure rotating torque by a load cell 61 for detection of torque. The test was performed according to test conditions shown in Table 3 and was ended when the rotating torque becomes two times that at normal operation. Also, the time that was taken till the end of the test was regarded as the lifespan. In Fig. 10, 60 is a test bearing, and 62 is a spring for load. Like the test bearing 50, the test bearing 60 is the bearing type number 6000 (φ10((26(8) provided with a cage, and the shield plates are not attached to both axial ends. The results of the dusting test are shown in Fig. 11, and the results of the bearing endurance test are shown in Fig. 12. In addition, in Figs. 11 and 12, the horizontal axis is expressed by the mass (g/m2) of lubricant, and the bearing space volume ratios of the lubricating oil 2 are surrounded by squares for reference.

**[Table 3]**

| Items | Contents |
|---|---|
| Test Bearing Size | #6000 ((10((26(8) |
| Load | Axial 147 N (15 kgf) |
| Rotational Speed | 1200 r/min |
| Atmosphere | In the order of 10-3 Pa (in vacuum), Room Temperature |

It turned out from Fig. 11 that, although a difference was hardly observed in the amount of dusting after rotation for 20 hours, the amount of dusting increases abruptly if a larger amount of lubricant than 16.1 g/m² is disposed in the rolling bearing at the initial stage of rotation. Additionally, both at the initial stage of rotation and after rotation for 20 hours, the amount of dusting was the smallest when the mass of lubricant disposed in the rolling bearing was 11.5 g/m².
It turned out from Fig. 12 that, if the mass of lubricant disposed in the rolling bearing is less than 9 g/m², the lifespan becomes short. Additionally, it was found out that, if the mass of lubricant is increased, the lifespan tends to become long.

## Claims

1. A rolling bearing comprising:
a first bearing ring having a first raceway,
a second bearing ring having a second raceway and capable of rotating relative to the first bearing ring,
a predetermined number of rolling elements disposed between the first raceway and the second raceway, and
a cage having a predetermined number of pockets which hold the rolling elements, respectively, at predetermined intervals in a peripheral direction,
wherein lubricant, which is shown by the following formula:
CF₃-(OCF₂CF2)ₘ-(OCF₂)ₙ-OCF₃ [Chem. 1]
where both m and n are positive integers
and which contains perfluoropolyether whose average molecular weight is 11000 or more, and tetrafluoroethylene resin particles of which the average diameter of primary particles is 1 µm or less, is disposed on at least one of the first raceway, the second raceway, the surfaces of the rolling elements, and the surfaces of the respective pockets of the cage which face the rolling elements in a ratio of 9 to 16 g per 1 m² with respect to a total area obtained by adding up an area of the first raceway, an area of the second raceway, an area of the surfaces of the rolling elements, and an area of the surfaces of the respective pockets of the cage which face the rolling elements.

2. The rolling bearing according to claim 1, wherein the lubricant is disposed in a ratio of 9 to 14 per 1 m² with respect to the total area.

3. The rolling bearing according to claim 1 or 2, wherein the tetrafluoroethylene resin particles are added by 40 to 60 vol.% with respect to the perfluoropolyether.

4. A full complement rolling bearing comprising:
a first bearing ring having a first raceway,
a second bearing ring having a second raceway and capable of rotating relative to the first bearing ring, and
a predetermined number of rolling elements disposed between the first raceway and the second raceway,
wherein lubricant, which is shown by the following formula:
CF₃-(OCF₂CF₂)ₘ-(OCF₂)ₙ-OCF₃ [Chem. 2]
where both m and n are positive integers, and which contains perfluoropolyether whose average molecular weight is 11000 or more, and tetrafluoroethylene resin particles of which the average diameter of primary particles is 1 µm or less, is disposed on at least one of the first raceway, the second raceway, and the surfaces of the rolling elements, in a ratio of 9 to 16 g per 1 m² with respect to a total area obtained by adding up an area of the first raceway, an area of the second raceway, and an area of the surfaces of the rolling elements.

5. The full complement rolling bearing according to claim 4, wherein the lubricant is disposed in a ratio of 9 to 14 per 1 m² with respect to the total area.

6. The full complement rolling bearing according to claim 4 or 5, wherein the tetrafluoroethylene resin particles are added by 40 to 60 vol.% with respect to the perfluoropolyether.
